# FASCICULE DE BREVET EUROPEEN

(11) **EP 3 346 169 B1**
(45) Date de publication et mention de la délivrance du brevet: **11.12.2019**
(21) Numéro de dépôt: 17210700.5
(22) Date de dépôt: 27.12.2017
(51) Int. Cl.: F16K 11/07, F16K 3/26, F16K 31/44, E03C 1/10, E03C 1/02, E03C 1/042, F16K 11/00

(54) **RACCORD D'ALIMENTATION DE FLUIDE POUR ROBINETTERIE SANITAIRE AVEC CLAPET ANTI-RETOUR**
FLUID-ZULEITUNGSANSCHLUSS FÜR SANITÄRARMATUR MIT RÜCKSCHLAGVENTIL
FLUID SUPPLY CONNECTION FOR SANITARY FITTING WITH CHECK VALVE

(30) Priorité: 04.01.2017 FR 1770007
(43) Date de publication de la demande: 11.07.2018
(73) Titulaire: Delabie, 80130 Friville Escarbotin (FR)
(72) Inventeur: TESTORI, Nicolas, 80860 NOYELLES SUR MER (FR)
(74) Mandataire: Cabinet Chaillot

(56) Documents cités:
- DE-A1- 2 840 564
- DE-U1- 8 528 344
- FR-A1- 2 732 436
- FR-A1- 3 011 904

## Description

La présente invention est relative à un raccord d'alimentation de fluide pour robinetterie sanitaire avec clapet anti-retour, comprenant un dispositif pour couper l'eau et contrôler l'étanchéité du clapet anti-retour par mise à l'air libre de la conduite située en amont du clapet anti-retour.

Dans les actuelles installations sanitaires distribuant de l'eau chaude et de l'eau froide, il est le plus souvent nécessaire de disposer des clapets anti-retour en amont des robinets mélangeurs ou mitigeurs, que ceux-ci soient thermostatiques ou mécaniques, pour empêcher tout retour de l'eau chaude dans les canalisations d'eau froide ou vice-versa en cas de différence de pression entre les fluides.

L'étanchéité d'un clapet anti-retour peut être entravée par un corps étranger : particule métallique, tartre, fibre, etc. Il est donc nécessaire de vérifier périodiquement l'efficacité du clapet anti-retour afin d'éviter tout accident.

Pour permettre le contrôle des clapets anti-retour sans devoir les démonter, il existe déjà des dispositifs qui combinent robinet d'arrêt et purge tels que ceux décrits dans les documents FR-2698148-A ou FR-2732436-A. Mais, ces conceptions sont difficilement utilisables pour contrôler les clapets anti-retour en amont des mitigeurs thermostatiques domestiques pour douche ou bain-douche par exemple.

Aussi la présente invention a-t-elle notamment pour but de fournir un raccord d'alimentation de fluide pour robinetterie sanitaire comprenant un dispositif pour couper l'eau et contrôler l'étanchéité d'un clapet anti-retour, le clapet anti-retour étant situé en aval, dans le raccord ou dans la robinetterie.

Un autre but est de fournir un tel raccord avec un dispositif de commande efficace et esthétique et un coût de réalisation attractif.

Ces buts, ainsi que d'autres qui apparaîtront par la suite sont atteints par un raccord d'alimentation de fluide pour robinetterie sanitaire avec clapet anti-retour comprenant un dispositif pour couper l'eau et contrôler l'étanchéité dudit clapet anti-retour situé en aval dudit dispositif pour couper l'eau par mise à l'air libre de la conduite située entre ledit dispositif pour couper l'eau et ledit clapet anti-retour, lequel raccord est, selon la présente invention, caractérisé en ce qu'il comporte, d'une part, un élément amont cylindrique creux qui comporte sur sa paroi externe un filetage destiné à être vissé dans une canalisation de fluide et qui est prolongé en aval par un boîtier évasé à intérieur lisse, et, d'autre part, un élément aval cylindrique creux, dit manchon, fileté dont la partie amont comporte un taraudage qui est fixé sur un téton fileté situé dans le fond de l'évidement du boîtier évasé.

Avantageusement, l'élément amont comporte un ou plusieurs passages longitudinaux reliant la cavité intérieure de cet élément amont et l'intérieur du boîtier évasé, et le manchon, comporte sur la partie externe de sa partie amont, deux gorges, l'une amont et l'autre aval, garnies de joints toriques, respectivement amont et aval, un ou plusieurs orifices radiaux étant ménagés entre les deux gorges de façon à faire communiquer l'intérieur du boîtier évasé avec l'espace intérieur du manchon.

De préférence, une bague taraudée est insérée entre la paroi interne du boîtier évasé et le manchon, la partie aval de cette bague taraudée comportant une gorge extérieure avec un joint torique coopérant avec la paroi interne du boîtier évasé.

Avantageusement, la bague taraudée est rendue mobile en translation sur un filetage amont du manchon, ce filetage amont étant situé immédiatement en aval de la gorge aval du manchon, et cette bague taraudée comporte, à son extrémité aval, une collerette dont la partie amont vient en appui sur l'extrémité du boîtier évasé lorsque ladite bague taraudée est vissée à fond, et vient en appui sur un épaulement du manchon, situé entre les deux filetages du manchon lorsque la bague est dévissée à fond.

De préférence, la bague taraudée comporte un alésage limité par deux chanfreins, cet alésage coopérant avec les deux joints toriques situés de part et d'autre des orifices radiaux, la longueur de cet alésage étant déterminée de façon à libérer le joint torique aval lorsque ladite bague taraudée est vissée à fond et à libérer le joint torique amont lorsque la bague taraudée est dévissée à fond, cette bague taraudée comportant une gorge entre l'alésage et la partie taraudée de manière à augmenter le passage à la périphérie du joint lorsque la bague est vissée à fond pour faciliter en cas de fuite au clapet anti-retour.

Avantageusement, le filetage amont du manchon comprend deux évents en forme de plats pour faciliter l'écoulement de l'eau en cas de fuite au clapet anti-retour.

De préférence, la longueur de l'alésage est telle qu'elle permet de couvrir l'un et l'autre des deux joints toriques lorsque la bague taraudée est vissée en position sensiblement médiane.

Avantageusement, la collerette de la bague taraudée coopère avec un capot coulissant en forme de rosace par une partie cannelée ou hexagonale et comporte une gorge périphérique qui reçoit un joint torique pour assurer le maintien du capot coulissant lorsque le dispositif est actionné, ce clapet coulissant pouvant ainsi être utilisé comme volant de manœuvre et comportant un marquage indiquant les fonctions « ouvert-fermé-contrôle ».

De préférence, la partie aval du manchon peut recevoir un clapet anti-retour précédé d'un filtre, lequel clapet anti-retour est rendu immobile en translation par un circlip logé dans une gorge interne du manchon.

La description qui va suivre et qui ne présente aucun caractère limitatif, doit être lue en regard des figures annexées parmi lesquelles :
- La figure 1 est une vue en coupe du dispositif selon la présente invention en position ouvert ;

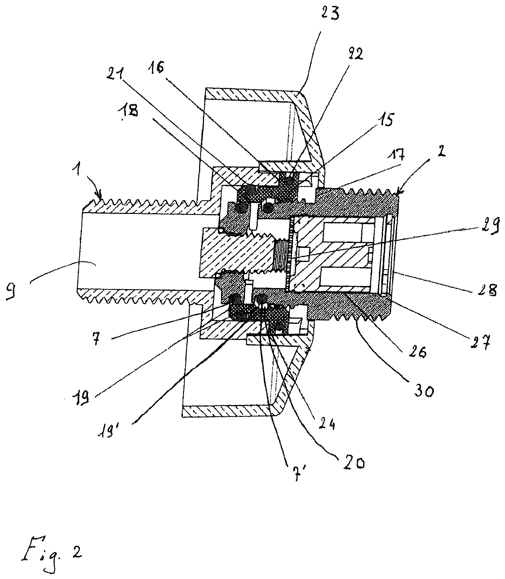

- La figure 2 est une vue en coupe du dispositif de la figure 1 en position purge ;

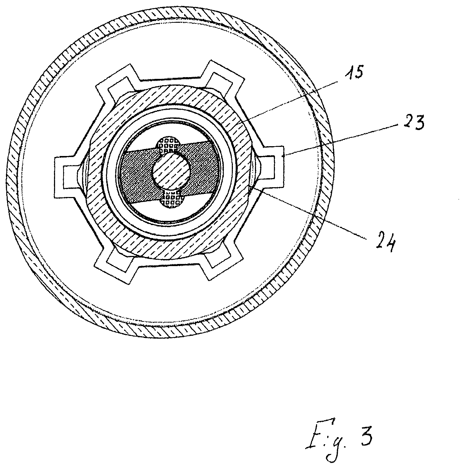

- La figure 3 est une vue en coupe en projection selon le plan A-A de la figure 1 ; et,
- La figure 4 est une vue en coupe du dispositif en version raccord décalé.

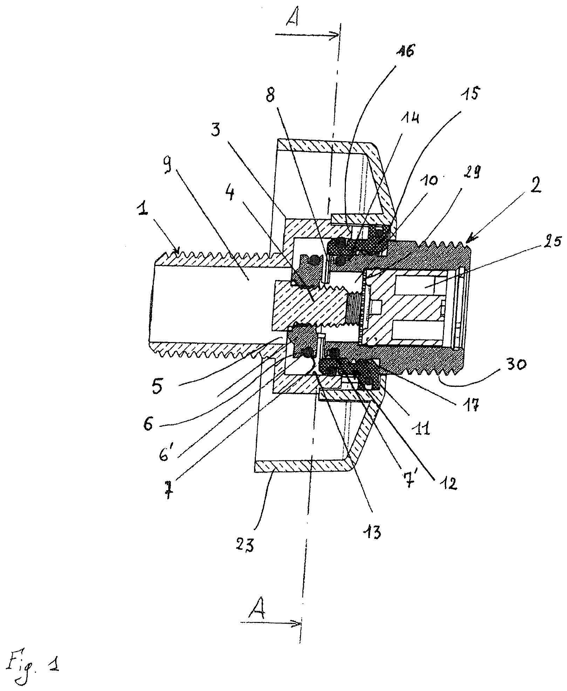

Ainsi qu'on peut notamment le voir sur la figure 1, un raccord d'alimentation selon la présente invention est constitué, d'une part, d'un élément amont cylindrique creux 1 comportant, sur sa paroi amont externe, un filetage destiné à être vissé dans la canalisation d'adduction d'eau chaude ou froide et, d'autre part, d'un élément aval cylindrique creux 2 fileté destiné au raccordement sur l'un ou l'autre des écrous de raccordement d'un robinet mitigeur.

Les termes « amont » et « aval » font référence au sens de circulation de l'eau.

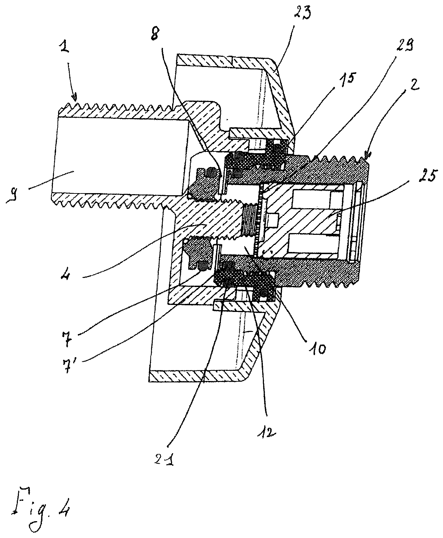

De façon connue les deux éléments amont 1 et aval 2 peuvent être désaxés, comme représenté à la figure 4, de manière à composer un raccord excentré pour faciliter l'installation dans le cas d'alimentation par tuyauteries encastrées.

Selon la présente invention l'élément amont 1 est prolongé en aval par un boîtier évasé 3, excentré ou non, dont l'intérieur est lisse, avec au fond de son évidement un téton fileté (ou taraudé) 4 sur lequel est ajusté l'élément aval 2 en forme de manchon, un ou des passages longitudinaux 5 étant ménagés entre la cavité intérieure 9 de l'élément amont 1 et l'intérieur du boîtier évasé 3.

La partie amont du manchon 2 est vissée sur le téton 4, la partie aval du manchon 2 comporte un alésage 26 pour recevoir éventuellement un clapet anti-retour 25 avec un filtre 29 disposé en amont de ce clapet anti-retour. L'ensemble constitué par le clapet anti-retour 25 et le filtre 29 est maintenu en position dans le manchon 2 au moyen d'un circlip 28 disposé dans une gorge 27 ménagée dans la paroi interne du manchon 2 au plus près de l'extrémité aval de ce dernier.

Ce manchon 2 comporte, sur la paroi externe de sa partie aval, deux gorges périphériques, l'une amont 6 et l'autre aval 6' qui reçoivent chacune un joint torique, amont 7 et aval 7'. Entre ces deux gorges, 6 et 6', sont ménagés un ou plusieurs orifices radiaux 8 pour permettre au fluide de s'écouler depuis la cavité intérieure 9 de l'élément amont 1 vers un espace intérieur 10 du manchon 2.

Cet espace intérieur 10 est situé autour du téton 4 et communique avec l'intérieur de la partie aval du manchon 2.

Le manchon 2 comporte, sur sa paroi externe, un filetage amont 11 situé immédiatement en aval de la gorge 6'. Ce filetage amont 11 reçoit une bague taraudée 12 qui s'intercale entre la paroi interne 13 du boîtier évasé 3 et la partie amont 14 du manchon 2 en regard des deux gorges amont 6 et aval 6'.

La bague taraudée 12 comporte à son extrémité aval une collerette 15 qui, lorsque cette bague taraudée 12 est vissée à fond, vient en appui sur l'extrémité aval 16 du boîtier évasé 3, et, lorsque la bague taraudée 12 est dévissée à fond, cette collerette 15 vient en appui sur un épaulement 17 du manchon 2 situé entre les filetages amont 11 et aval 30 du manchon 2.

Le filetage aval 30 est situé sur la partie aval du manchon 2 pour en permettre le raccordement sur l'un ou l'autre des écrous de raccordement du robinet mitigeur.

La paroi intérieure de la bague taraudée 12 comporte un alésage 18 disposé entre deux chanfreins 19 et 19', le chanfrein 19 étant situé sur la face amont de cette bague taraudée 12. La longueur de cet alésage 18 est telle que lorsque la bague taraudée 12 est dévissée à fond, elle vient couvrir le joint torique aval 7' et libère le joint torique amont 7, ce qui permet le passage du fluide depuis la cavité intérieure 9 de l'élément amont 1 vers l'espace intérieur 10 du manchon 2, et lorsque la bague taraudée 15 est vissée à fond, elle vient recouvrir le joint torique amont 7 ce qui a pour effet de fermer l'arrivée d'eau, et, dans le même temps, elle libère le joint torique aval 7' ce qui permet une mise à l'air libre de l'espace intérieur 10 du manchon 2. Ainsi, lorsque la bague taraudée 12 est vissée à fond, tout écoulement de l'eau vers l'extérieur à la périphérie du joint 7' libéré permet de détecter une fuite au clapet anti-retour 25. De cette manière, si l'on constate une fuite lors de la mise en position purge, il est aisé de nettoyer ou remplacer le clapet anti-retour 25 et le filtre 29.

Par ailleurs, la longueur de l'alésage 18 est suffisante pour couvrir les joints toriques 7 et 7' lorsque la bague taraudée 12 est mise en position intermédiaire, c'est-à-dire sensiblement médiane.

Une gorge 20 est ménagée à l'intérieur de la bague taraudée 12, entre l'alésage 18 et la partie taraudée de manière à augmenter le passage à la périphérie du joint 7' pour faciliter l'évacuation de l'eau lorsque la bague taraudée 12 est vissée à fond. Avantageusement, un ou plusieurs plats peuvent être disposés sur le filetage amont 11 du manchon 2 pour faciliter l'évacuation de l'eau vers l'extérieur.

La partie amont de la bague taraudée 12 comporte une gorge extérieure qui reçoit un joint torique 21 pour assurer l'étanchéité avec la paroi interne du boîtier 3. La collerette 15 de la bague taraudée 12 coopère avec un capot coulissant 23, ou rosace, par un crantage ou liaison hexagonale 24. Ce capot 23 est rendu mobile en translation sur ce crantage 24 pour lui permettre de venir en appui sur le mur qui reçoit le raccord. Le capot 23 sert ainsi de volant pour faciliter le déplacement de la bague taraudée 12. La collerette 15 comporte une gorge périphérique qui reçoit un joint torique 22 pour assurer le maintien du capot 23 tout en permettant un glissement de celui-ci lorsque le dispositif est actionné.

Avantageusement, ce capot 23 peut ainsi être utilisé comme volant de manoeuvre et comporter un marquage peint ou gravé indiquant les fonctions «ouvert-fermé-contrôle». Comme présenté en figure 4, le même dispositif selon la présente invention peut être réalisé en version raccord excentré dans le cas d'installation sur alimentation encastrée.

## Revendications

1. Raccord d'alimentation de fluide pour robinetterie sanitaire avec clapet anti-retour comprenant un dispositif pour couper l'eau et contrôler l'étanchéité dudit clapet anti-retour par mise à l'air libre de la conduite située en amont du clapet anti-retour, **caractérisé en ce qu'**il comporte, d'une part, un élément amont cylindrique creux (1) qui comporte sur sa paroi externe un filetage destiné à être vissé dans une canalisation de fluide et qui est prolongé en aval par un boîtier évasé (3) à intérieur lisse, l'élément amont cylindrique creux (1) comportant une cavité intérieure (9) destinée à être raccordée à la canalisation de fluide et communiquant avec l'intérieur du boîtier évasé (3) et, d'autre part, un élément aval cylindrique creux (2), dit manchon, fileté, destiné à être raccordé à la robinetterie sanitaire et dont la partie amont comporte un taraudage qui est fixé sur un téton (4) fileté situé dans le fond de l'évidement dudit boîtier évasé (3), l'élément aval cylindrique creux (2) comportant un espace intérieur (10), le dispositif pour couper l'eau et contrôler l'étanchéité dudit clapet anti-retour étant configuré pour permettre dans une première position le passage du fluide depuis la cavité intérieure (9) de l'élément amont (1) vers l'espace intérieur (10) du manchon (2) et dans une seconde position la mise à l'air libre de l'espace intérieur (10) du manchon (2).

2. Raccord selon la revendication 1, **caractérisé en ce que** l'élément amont (1) comporte un ou plusieurs passages longitudinaux (5) reliant la cavité intérieure (9) dudit élément amont (1) et l'intérieur du boîtier évasé (3), et que le manchon (2), comporte dans sa partie externe de sa partie amont, deux gorges, l'une amont (6) et l'autre aval (6'), garnies de joints toriques, respectivement amont (7) et aval (7'), un ou plusieurs orifices radiaux (8) étant ménagés entre les deux gorges (6) et (6') de façon à faire communiquer l'intérieur dudit boîtier évasé (3) avec l'espace intérieur (10) dudit manchon (2).

3. Raccord selon les revendications 1 ou 2, **caractérisé en ce qu'**une bague taraudée (12) est insérée entre la paroi interne du boîtier évasé (3) et la partie amont (14) du manchon (2), la partie aval de ladite bague taraudée (12) comportant une gorge extérieure avec un joint torique (21) coopérant avec la paroi interne dudit boîtier évasé (3).

4. Raccord selon la revendication 3, **caractérisé en ce que** la bague taraudée (12) est rendue mobile en translation sur un filetage amont (11) du manchon (2), ledit filetage amont (11) étant situé immédiatement en aval de la gorge aval (6') dudit manchon (2), et que ladite bague taraudée (12) comporte, à son extrémité aval, une collerette (15) dont la partie amont vient en appui sur l'extrémité du boîtier évasé (3) lorsque ladite bague taraudée (12) est vissée à fond, et vient en appui sur un épaulement (17) du manchon (2), situé entre les deux filetages dudit manchon (2) lorsque ladite bague taraudée (12) est dévissée à fond.

5. Raccord selon la revendication 4, **caractérisé en ce que** la bague taraudée (12) comporte un alésage (18) limité par deux chanfreins (19 et 19'), ledit alésage (18) coopérant avec les deux joints toriques (7 et 7') situés de part et d'autre des orifices radiaux (8), la longueur dudit alésage (18) étant déterminée de façon à libérer le joint torique aval (7') lorsque ladite bague taraudée (12) est vissée à fond et à libérer le joint torique amont (7) lorsque ladite bague taraudée (1) est dévissée à fond, ladite bague taraudée (12) comportant une gorge (20) entre l'alésage (18) et la partie taraudée de manière à augmenter le passage à la périphérie du joint 7' lorsque ladite bague (12) est vissée à fond pour faciliter l'évacuation de l'eau en cas de fuite au clapet anti-retour.

6. Raccord selon la revendication 4 ou 5, **caractérisé en ce que** le filetage amont (11) du manchon (2) comprend deux évents en forme de plats pour faciliter l'écoulement de l'eau en cas de fuite au clapet anti-retour.

7. Raccord selon la revendication 5, **caractérisé en ce que** la longueur de l'alésage (18) est telle qu'elle permet de couvrir l'un et l'autre des deux joints toriques, amont (7) et aval (7'), lorsque la bague taraudée (12) est vissée en position sensiblement médiane.

8. Raccord la revendication 4, **caractérisé en ce que** la collerette (15) de la bague taraudée (12) coopère avec un capot coulissant (23) en forme de rosace par une partie cannelée ou hexagonale (24) et que ladite collerette (15) comporte une gorge périphérique qui reçoit un joint torique (22) pour assurer le maintien dudit capot coulissant (23).

9. Raccord selon l'une quelconque des revendications 1 à 8, **caractérisé en ce que** la partie aval du manchon (2) peut recevoir un clapet anti-retour (25) précédé d'un filtre (29), lequel clapet anti-retour (25) est rendu immobile en translation par un circlip (28) logé dans une gorge interne (27) du manchon (2).

## Patentansprüche

1. Fluid-Zuleitungsanschluss für Sanitärarmatur mit Rückschlagventil, umfassend eine Vorrichtung, um das Wasser abzustellen und die Dichtigkeit des Rückschlagventils durch Entlüften der Leitung zu überprüfen, die sich dem Rückschlagventil vorgelagert befindet, **dadurch gekennzeichnet, dass** er zum einem ein vorgelagertes hohles zylindrisches Element (1) aufweist, das auf seiner Außenwand ein Gewinde aufweist, das bestimmt ist, in eine Fluidkanalisation geschraubt zu sein und das nachgelagert durch ein innen glattes ausgestelltes Gehäuse (3) verlängert wird, wobei das vorgelagerte hohle zylindrische Elemente (1) einen inneren Hohlraum (9) aufweist, der zum Anschluss an die Fluidkanalisation bestimmt ist und mit dem Inneren des ausgestellten Gehäuses (3) kommuniziert, und zum anderen ein nachgelagertes hohles zylindrisches Element (2), bezeichnet als Hülse, mit Gewinde, die zum Anschluss an die Sanitärarmatur bestimmt ist und deren vorgelagerter Teil ein Gewinde aufweist, das auf einem gewindeten Zapfen (4) befestigt ist, der sich im Boden der Ausnehmung des ausgestellten Gehäuses (3) befindet, wobei das nachgelagerte hohle zylindrische Element (2) einen Innenraum (10) aufweist, wobei die Vorrichtung zum Abstellen des Wassers und Kontrollieren der Dichtigkeit des Rückschlagventils konfiguriert ist, um in einer ersten Position den Durchgang des Fluids aus dem inneren Hohlraum (9) des vorgelagerten Elements (1) in Richtung des Innenraums (10) der Hülse (2) und in einer zweiten Position die Entlüftung des Innenraums (10) der Hülse (2) zu gestatten.

2. Anschluss nach Anspruch 1, **dadurch gekennzeichnet, dass** das vorgelagerte Element (1) einen oder mehrere Längsdurchgänge (5) aufweist, welche den inneren Hohlraum (9) des vorgelagerten Elements (1) und das Innere des ausgestellten Gehäuses (3) verbinden, und dass die Hülse (2) in ihrem äußeren Teil ihres vorgelagerten Teils zwei Nuten, eine vorgelagert (6) und die andere nachgelagert (6'), aufweist, die mit Dichtungsringen, jeweils vorgelagert (7) und nachgelagert (7'), ausgestattet sind, wobei eine oder mehrere radiale Öffnungen (8) zwischen den zwei Nuten (6) und (6') derart ausgebildet sind, dass das Innere des ausgestellten Gehäuses (3) mit dem Innenraum (10) der Hülse (2) in Kommunikation versetzt wird.

3. Anschluss nach einem der Ansprüche 1 oder 2, **dadurch gekennzeichnet, dass** ein Gewindering (12) zwischen der Innenwand des ausgestellten Gehäuses (3) und dem vorgelagerten Teil (14) der Hülse (2) eingesetzt ist, wobei der nachgelagerte Teil des Gewinderings (12) eine äußere Nut mit einem Dichtungsring (21) aufweist, der mit der Innenwand des ausgestellten Gehäuses (3) zusammenwirkt.

4. Anschluss nach Anspruch 3, **dadurch gekennzeichnet, dass** der Gewindering (12) auf einem vorgelagerten Gewinde (11) der Hülse (2) translatorisch beweglich ist, wobei sich das vorgelagerte Gewinde (11) unmittelbar nachgelagert zu der nachgelagerten Nut (6') der Hülse (2) befindet, und dass der Gewindering (12) an seinem nachgelagerten Ende einen Kragen (15) aufweist, dessen vorgelagerter Teil sich auf dem Ende des ausgestellten Gehäuses (3) abstützt, wenn der Gewindering (12) vollständig geschraubt ist, und sich auf einem Absatz (17) der Hülse (2) abstützt, der sich zwischen den zwei Gewinden der Hülse (2) befindet, wenn der Gewindering (12) vollständig entschraubt ist.

5. Anschluss nach Anspruch 4, **dadurch gekennzeichnet, dass** der Gewindering (12) eine Bohrung (18) aufweist, die durch zwei Schrägen (19 und 19') begrenzt ist, wobei die Bohrung (18) mit den zwei Dichtungsringen (7 und 7') zusammenwirkt, die sich beiderseits der radialen Öffnungen (8) befinden, wobei die Länge der Bohrung (18) derart bestimmt ist, dass der nachgelagerte Dichtungsring (7') freigegeben wird, wenn der Gewindering (12) vollständig geschraubt ist, und der vorgelagerte Dichtungsring (7) freigegeben wird, wenn der Gewindering (1) vollständig entschraubt ist, wobei der Gewindering (12) eine Nut (20) zwischen der Bohrung (18) und dem Gewindeteil derart aufweist, dass der Durchgang am Umfang der Dichtung (7') vergrößert wird, wenn der Ring (12) vollständig geschraubt ist, um das Ablassen des Wassers bei einem Leck am Rückschlagventil zu erleichtern.

6. Anschluss nach einem der Ansprüche 4 oder 5, **dadurch gekennzeichnet, dass** das vorgelagerte Gewinde (11) der Hülse (2) zwei Entlüftungsöffnungen in Form von Abflachungen umfasst, um das Fließen des Wassers bei einem Leck am Rückschlagventil zu erleichtern.

7. Anschluss nach Anspruch 5, **dadurch gekennzeichnet, dass** die Länge der Bohrung (18) derart ist, dass sie erlaubt, den einen und den anderen von den zwei Dichtungsringen, vorgelagert (7) und nachgelagert (7'), abzudecken, wenn der Gewindering (12) in etwa mittlerer Position geschraubt ist.

8. Anschluss nach Anspruch 4, **dadurch gekennzeichnet, dass** der Kragen (15) des Gewinderings (12) mittels eines geriffelten oder sechseckigen Teils (24) mit einer rosettenförmigen Gleitkappe (23) zusammenwirkt und dass der Kragen (15) eine Umfangsnut aufweist, die einen Dichtungsring (22) aufnimmt, um den Halt der Gleitkappe (23) zu gewährleisten.

9. Anschluss nach einem der Ansprüche 1 bis 8, **dadurch gekennzeichnet, dass** der nachgelagerte Teil der Hülse (2) ein Rückschlagventil (25) aufnehmen kann, vor dem ein Filter (29) liegt, wobei das Rückschlagventil (25) durch einen Sicherungsring (28), der in einer inneren Nut (27) der Hülse (2) untergebracht ist, translatorisch blockiert wird.

## Claims

1. A fluid supply connection for sanitary fitting with check valve comprising a device for cutting off the water and controlling the sealing of said check valve by venting the pipe located upstream from the check valve, **characterized in that** it includes, on the one hand, a hollow cylindrical upstream element (1) that includes, on its outer wall, a thread intended to be screwed in a fluid channel and that is extended in the downstream direction by a flared housing (3) with a plain inside, the hollow cylindrical upstream element (1) including an inner cavity (9) intended to be connected to the fluid channel and communicating with the inside of the flared housing (3) and, on the other hand, a threaded hollow cylindrical downstream element (2), called sleeve, intended to be connected to the sanitary fitting and the upstream part of which includes a tapping that is fixed on a threaded pin (4) located in the bottom of the recess of said flared housing (3), the hollow cylindrical downstream element (2) including an inner space (10), the device for cutting off the water and controlling the sealing of said check valve being configured to allow, in a first position, the passage of the fluid from the inner cavity (9) of the upstream element (1) toward the inner space (10) of the sleeve (2) and in a second position venting of the inner space (10) of the sleeve (2).

2. The connection according to claim 1, **characterized in that** the upstream element (1) includes one or several longitudinal passages (5) connecting the inner cavity (9) of said upstream element (1) and the inside of the flared housing (3), and the sleeve (2) includes, in its outer part of its upstream part, two grooves, one upstream (6) and the other downstream (6'), lined with O-rings, respectively upstream (7) and downstream (7'), one or several radial orifices (8) being arranged between the two grooves (6) and (6') so as to cause the inside of said flared housing (3) to communicate with the inner space (10) of said sleeve (2).

3. The connection according to claims 1 or 2, **characterized in that** a tapped ring (12) is inserted between the inner wall of the flared housing (3) and the upstream part (14) of the sleeve (2), the downstream part of said tapped ring (12) including an outer groove with an O-ring (21) cooperating with the inner wall of said flared housing (3).

4. The connection according to claim 3, **characterized in that** the tapped ring (12) is made translatable on an upstream thread (11) of the sleeve (2), said upstream thread (11) being located immediately downstream from the downstream groove (6') of said sleeve (2), and said tapped ring (12) includes, at its downstream end, a collar (15) whose upstream part bears on the end of the flared housing (3) when said tapped ring (12) is screwed tightly, and bears on a shoulder (17) of the sleeve (2), located between the two threads of said sleeve (2) when said tapped ring (12) is completely unscrewed.

5. The connection according to claim 4, **characterized in that** the tapped ring (12) includes a bore (18) limited by two bevels (19 and 19'), said bore (18) cooperating with the two O-rings (7 and 7') located on either side of the radial orifices (8), the length of said bore (18) being determined so as to release the downstream O-ring (7') when said tapped ring (12) is screwed tightly and to release the upstream O-ring (7) when said tapped ring (1) is completely unscrewed, said tapped ring (12) including a groove (20) between the bore (18) and the tapped part so as to increase the passage at the periphery of the seal (7') when said ring (12) is screwed tightly to facilitate the discharge of water in case of leak at the check valve.

6. The connection according to claim 4 or 5, **characterized in that** the upstream thread (11) of the sleeve (2) comprises two flat vents in order to facilitate the flow of water in case of leak at the check valve.

7. The connection according to claim 5, **characterized in that** the length of the bore (18) is such that it makes it possible to cover both of the two O-rings, upstream (7) and downstream (7'), when the tapped ring (12) is screwed in the substantially median position.

8. The connection according to claim 4, **characterized in that** the collar (15) of the tapped ring (12) cooperates with a rosette-shaped sliding cover (23) by a fluted or hexagonal portion (24) and said collar (15) includes a peripheral groove that receives an O-ring (22) in order to maintain said sliding cover (23).

9. The connection according to any one of claims 1 to 8, **characterized in that** the downstream part of the sleeve (2) can receive a check valve (25) preceded by a filter (29), said check valve (25) being immobilized in translation by a circlip (28) housed in an inner groove (27) of the sleeve (2).
